Europäisches Patentamt

**European Patent Office**

**Office européen des brevets**

(19)

(11) Numéro de publication : **0 049 189**
**B1**

(12)

# FASCICULE DE BREVET EUROPÉEN

(45) Date de publication du fascicule du brevet :
**09.01.85**

(51) Int. Cl.⁴ : **H 04 L 27/12**

(21) Numéro de dépôt : **81401444.5**

(22) Date de dépôt : **16.09.81**

(54) **Procédés de génération de modulations "duobinaire FSK", "tamed FSK" et "TFM", et modulateurs mettant en oeuvre ces procédés.**

(30) Priorité : **24.09.80 FR 8020867**

(43) Date de publication de la demande :
**07.04.82 Bulletin 82/14**

(45) Mention de la délivrance du brevet :
**09.01.85 Bulletin 85/02**

(84) Etats contractants désignés :
**DE GB NL SE**

(56) Documents cités :
**FR-A- 2 428 345**
**GB-A- 2 004 442**
**US-A- 3 388 330**
**1980 INTERNATIONAL ZÜRICH SEMINAR ON DIGI-
TAL COMMUNICATIONS, PROCEEDINGS OF THE
IEEE, Cat. no. 80 CH 1521-4 COM, mars 1980 New
York, US TOR AULIN et al. "Transmitter and receiver
structures for M-ary partial response FM", pages
A2.1-A2.6**

(73) Titulaire : **L'Etat Français représenté par le Secrétaire d'Etat aux Postes et Télécommunications et à la
Télédiffusion
(Centre National d'Etudes des Télécommunications)
38-40 rue du Général Leclerc
F-92131 Issy-les-Moulineaux (FR)**

**Etablissement Public de Diffusion dit "Télédiffusion
de France"
21-27 rue Barbès
F-92120 Montrouge (FR)**

(72) Inventeur : **Pommier, Daniel
Groupe Scolaire
F-35310 Mordelles (FR)**

(74) Mandataire : **Le Guen, Louis François
13, rue Emile Bara BP 91
F-35802 Dinard Cedex (FR)**

Jouve, 18, rue St-Denis, 75001 Paris, France

EP 0 049 189 B1

## Description

La présente invention concerne des procédés de génération de modulation et des modulateurs de fréquence à réponse partielle à 3 ou 5 états, d'indice 1/2 à phase continue et éventuellement à fréquence continue. Dans la définition précédente, l'indice est défini comme le rapport entre la déviation crête à crête de la fréquence et le débit binaire.

D'une manière générale, l'association du codage à réponse partielle à la modulation de fréquence permet d'obtenir une onde d'enveloppe constante à laquelle correspond une densité spectrale de puissance qui décroît beaucoup plus rapidement que celle d'une modulation par déplacement de fréquence à deux états de même indice. Cette caractéristique a une très grande importance dans le cas de canaux numériques de grande capacité utilisant des supports de transmission à bande limitée et dans lesquels on utilise des organes non linéaires.

En outre, pour obtenir une densité spectrale de puissance avec une décroissance encore plus rapide que celle d'une modulation ou seule la continuité de phase est assurée, on doit éviter toute discontinuité ou variation rapide de la fréquence instantanée.

Une modulation qui répond aux conditions énoncées ci-dessus est désignée, en langue anglaise, par « Tamed Frequency Modulation » ou « TFM ». A ce sujet, on pourra se reporter à l'article technique suivant : « Tamed Frequency Modulation, A Novel Method to Achieve Spectrum Economy in Digital Transmission », par Frank de Jager and Cornelis B. Dekker, dans la revue américaine IEEE Transactions on Communications, Vol. COM-26, N° 5, Mai 1978, pages 534 à 542. A ce sujet, on pourra également se reporter au brevet anglais GB 2 004 442 dont les inventeurs sont les auteurs de l'article précédemment cité.

Dans l'article mentionné ci-dessus, on a envisagé deux types d'émetteurs pour obtenir une modulation TFM. Dans un premier émetteur, on utilise un modulateur — voir Fig. 14a, page 539 — qui comporte deux boucles de verrouillage pour stabiliser la déviation de fréquence et la fréquence porteuse. Un avantage de ce type d'émetteur est que le signal de sortie TFM peut satisfaire exactement à la condition d'une amplitude constante. Un inconvénient est dû à la présence des boucles de contre-réaction qui peuvent entraîner des instabilités. Dans un second émetteur, on utilise — voir Fig. 15, page 540 — des tables de sinus et de cosinus qui sont enregistrées dans des mémoires qui sont adressées. L'avantage de ce système est l'absence de boucles de contre-réaction. Son inconvénient est dû, dans la pratique, à l'apparition de petites variations d'amplitude et surtout à une limitation technologique vers les débits très élevés. Dans le brevet GB 2 004 442, on retrouve ces deux types d'émetteurs.

Par ailleurs, on pourra constater d'après les Figs. 4, 13 et 14 du brevet GB 2 004 442 que l'on y procède à un filtrage en bande de base avant modulation.

Un premier objet de la présente invention consiste à prévoir un procédé de modulation et des modulateurs fonctionnant suivant ce procédé de modulation qui permettent, en utilisant des moyens éprouvés, d'obtenir une modulation de fréquence à réponse partielle à 3 ou 5 états d'indice 1/2 à phase continue.

Un second objet de l'invention consiste à prévoir un procédé de génération de modulation et des modulateurs de fréquence à réponse partielle à 3 ou 5 états d'indice 1/2 à phase et à fréquence continues, c'est-à-dire, dans le cas d'une réponse partielle à 5 états d'une modulation du type TFM, dans lesquels les inconvénients mentionnés ci-dessus sont évités et qui ne comprennent que des moyens simples et stables, tels que des filtres passifs, des lignes ou circuits à retard, des diviseurs par deux et des modulateurs en anneaux.

Avant d'exposer les caractéristiques des modulateurs suivant l'invention, on va rappeler quelques notions théoriques qui permettront de mieux apprécier les avantages des procédés et des modulateurs suivant l'invention.

Tout d'abord on rappelle que le codage à réponse partielle — on pourra se reporter également au brevet US 3 388 330 — consiste à transformer le train de signaux binaires à transmettre en un train de signaux à N états, de même vitesse de modulation, avec N supérieur à 2. La redondance ainsi introduite crée une corrélation entre les états émis. Cette corrélation réduit l'encombrement spectral du signal émis, mais, en contre-partie, l'augmentation du nombre des états réduit la résistance au bruit. Cette réduction de la résistance au bruit dépend du nombre des états et de la démodulation utilisée. En particulier, comme cela est indiqué, dans l'article mentionné ci-dessus, l'utilisation d'un démodulateur cohérent, dans le cas d'une modulation TFM à 5 états, limite cette réduction à seulement 1 dB par rapport aux performances obtenues en démodulation cohérente d'un signal à quatre états de phase.

Le codage à réponse partielle est obtenu par deux transformations successives :

— un précodage qui transforme un train binaire $\alpha_i$ en un train binaire $d_i$ par la relation modulo 2 :

$$\alpha_n = K'_1 d_n + K'_2 d_{n-1} + \ldots + K'_{M-1} d_{n-(M-2)} \tag{1}$$

— l'élaboration d'un signal à N niveaux correspondant à la suite des nombres $p_i$ donnés par la relation :

$$p_n = k_1 d_n + k_2 d_{nl} + \ldots + k_{M-1} d_{n-(M-2)} \tag{2}$$

où les $k_i$ sont des coefficients entiers positifs, négatifs ou nuls, avec $k'_i = k_i$ (modulo 2) et $\alpha_n = p_n$ (modulo 2), c'est dire que l'information n'est transmise que par la parité de $p_n$.

En particulier, la réponse partielle à 3 états de fréquence d'indice 1/2 est obtenue avec :

$$k_1 = 1, \; k_2 = 1 \text{ et } k_i = 0, \text{ si } i > 2$$

d'où :

$$d_n = (\alpha_n + d_n) \text{ modulo } 2$$
$$p_n = d_n + d_{n-1} \tag{3}$$
$p_n$ prend les valeurs 0, 1, 2 auxquelles correspond le signal :

$$y_{3.n}(t) = A \cos 2\eta\left(f_0 + \Delta F\left(\frac{p_n - 1}{2}\right)\right) t \, ; \, t \in [nT, (n + 1) \, T[ \tag{4}$$

On obtient une modulation d'indice 1/2, si $\Delta F = (1/2T)$, où $1/T$ représente la vitesse de modulation.

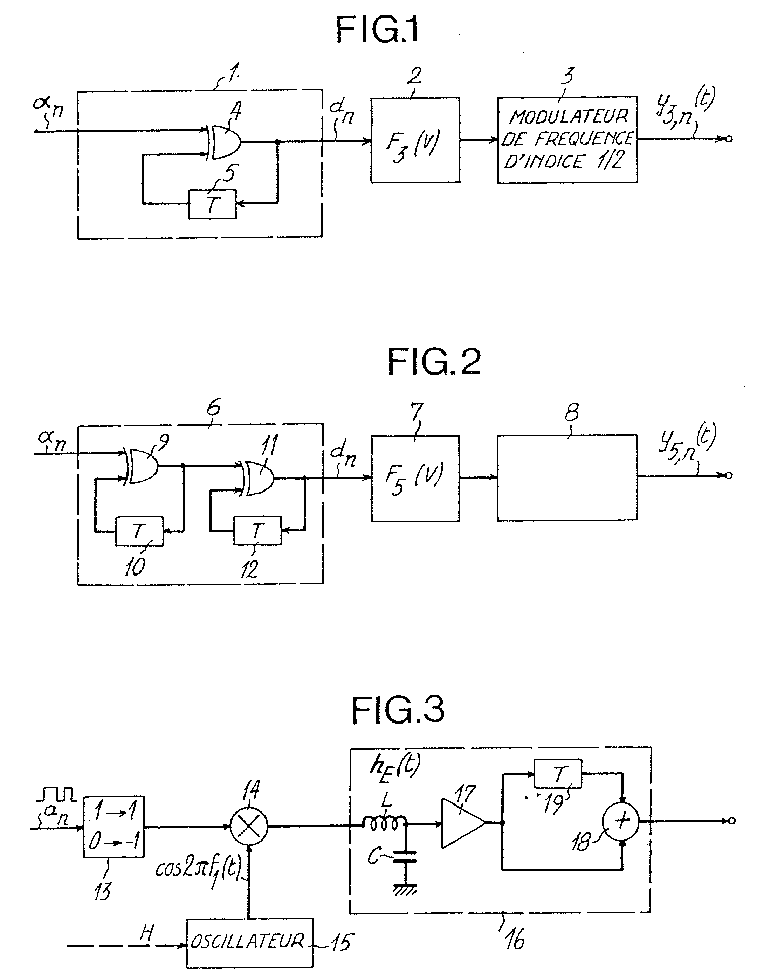

Le schéma de principe connu d'un modulateur de fréquence à réponse partielle à 3 états de fréquence d'indice 1/2 est montré à la Fig. 1. Dans ce schéma, les signaux binaires purs $\alpha_n$ sont appliqués à un circuit de précodage 1 qui délibre les signaux $d_n$ et dont la sortie est reliée à l'entrée d'un filtre 2 dont la sortie est reliée à un modulateur 3 qui délivre le signal $y_{3.n}$. Le circuit de précodage 1 comprend une porte OU-exclusif 4 dont une entrée est reliée à l'entrée de 1 et dont la sortie est reliée, d'une part, à la sortie de 1 et, d'autre part, à l'entrée d'un circuit à retard T 5 dont la sortie est reliée à la seconde entrée de la porte OU-exclusif 4. Le circuit de précodage exécute l'addition (modulo 2) mentionnée ci-dessus en (3). Le filtre 2 a un gain complexe $F_3(v)$ :

$$F_3(v) = 1 + e^{j2\eta vT} \tag{5}$$

On peut rapprocher ce gain de celui du filtre $G(\omega)$ montré à la Fig. 4 de l'article précité ou du brevet GB 2 004 442. A priori, pour réaliser le modulateur 3, on pourrait utiliser un modulateur de fréquence analogique. Mais un tel modulateur ne permet pas d'assurer simplement une stabilité de l'indice de modulation, telle qu'à chaque saut de fréquence de durée T corresponde exactement un saut de phase de $\pm \eta/2$.

Dans le cas d'une modulation à réponse partielle à 5 états de fréquence d'indice 1/2, on prend :

$$k_1 = 1, \; k_2 = 2, \; k_3 = 1 \text{ et } k_i = 0, \text{ si } i > 3$$

d'où :

$$d_n = (\alpha_n + d_{n-2}) \text{ modulo } 2$$
$$p_n = d_n + 2d_{n-1} + d_{n-2} \tag{6}$$

Les valeurs prises par $p_n$ sont alors 0, 1, 2, 3 et 4, auxquelles correspond le signal $y_{5,n}(t)$, tel que :

$$y_{5,n}(t) = A \cos 2\eta\left(f_0 + \frac{\Delta F(p_n - 2)}{4}\right) t \, ; \, t \in [nT, (n + 1) \, T[ \tag{7}$$

Comme précédemment, la modulation est d'indice 1/2 si $\Delta F = 1/2T$ et le schéma de principe connu d'un modulateur correspondant est celui de la Fig. 2 qui comporte encore un circuit de précodage 6 à l'entrée duquel est appliqué le signal binaire pur $\alpha_n$ et dont la sortie est reliée à l'entrée d'un filtre 7 dont la sortie est reliée à l'entrée d'un modulateur 8 de fréquence d'indice 1/2 qui délivre $y_{5,n}(t)$. Le circuit de précodage 6 comprend une première porte OU-exclusif 9 dont une entrée est reliée à l'entrée de 6 et dont la sortie est reliée, d'une part, à sa seconde entrée par l'intermédiaire d'un circuit à retard T 10 et, d'autre part, à la première entrée d'une seconde porte OU-exclusif 11. La sortie de la porte OU-exclusif 11 est reliée, d'une part, à sa seconde entrée, par l'intermédiaire d'un circuit à retard T 12, et, d'autre part, à la sortie de 6. Ainsi, le circuit de précodage 6 exécute l'opération mentionnée ci-dessus en (6). Le filtre 7 a un gain complexe $F_5(v)$, tel que :

$$F_5(\lambda) = 1 + 2 e^{i\eta vT} + e^{4i\eta vT} \tag{8}$$

Ce filtre correspond au filtre 2 de la Fig. 1. Les mêmes remarques que celles qui ont été faites à propos du modulateur 3 peuvent être faites pour le modulateur 8.

**0 049 189**

Pour atteindre les objectifs de la présente invention, il est prévu d'utiliser, pour éviter les inconvénients des modulateurs décrits ci-dessus, des modulateurs dans lesquels on utilise une modulation MSK simplifiée. C'est pourquoi on va maintenant rappeler les principes de la modulation MSK simplifiée.

La modulation MSK simplifiée s'obtient par filtrage à bande latérale atténuée d'une modulation cohérente à 2 états de phase. A ce sujet, on pourra se reporter à l'article technique intitulé « Etude théorique et expérimentale d'une modulation simplifiée à déplacement de fréquence d'indice 1/2 à phase continue » par D. Pommier, J. Veillard et A. Glavieux, paru dans la revue technique française « Les Annales des Télécommunications », 34 — N° 7-8, 1979, pp. 423-437. On pourra également se reporter au brevet FR 2 428 345 dont les deux premiers inventeurs nommés sont les auteurs de cet article français.

Pour un débit à transmettre égal à 1/T, dans un canal de fréquence centrale $f_c$, la modulation à deux états de phase doit s'effectuer sur une porteuse de fréquence $f_1 = f_c - 1/4\,T$ et le filtre centré sur la fréquence $f_2 = f_c + 1/4\,T$ doit avoir une réponse impulsionnelle de la forme :

$$h_E(t) = \sin (2\,\eta f_2 t + 0) \quad \text{si} \quad t \in [0, T[$$
$$h_E = 0 \quad \text{si} \quad t \notin [0, T[ \tag{9}$$

La Fig. 3 donne le schéma connu d'un modulateur délivrant des signaux à modulation MSK simplifiée. Les signaux binaires purs modulants sont appliqués à l'entrée d'un circuit de codage 13 dont la sortie est reliée à une entrée d'un modulateur en anneau 14 dont la seconde entrée est reliée à la sortie d'un oscillateur 15 délivrant la porteuse $f_1$. La sortie du modulateur en anneau 14 est reliée à l'entrée d'un filtre 16 dont la sortie délivre les signaux modulés. Le filtre 16 comprend une inductance L dont une borne est connectée à l'entrée du filtre et dont l'autre borne est reliée à l'entrée d'un amplificateur 17. La borne commune à l'inductance L et à l'entrée de 17 est reliée à la masse par un condensateur C. La sortie de l'amplificateur 17 est reliée, d'une part, directement à une entrée d'un additionneur 18 et, d'autre part, par l'intermédiaire d'un circuit à retard T 19, à l'autre entrée de l'additionneur 18. La sortie de 18 correspond à celle du filtre 16.

En particulier, on obtient exactement une modulation MSK si, à la modulation biphase cohérente représentée par :

$$V_1(t) = \sum_{n=-\infty}^{+\infty} a_n^* \cos 2\,\eta f_1 t R_1(t - nT)$$

avec
$$R_1(t) = 1 \quad \text{si} \quad t \in ]0, T]$$
$$R_1(t) = 0 \quad \text{si} \quad t \notin ]0, T] \tag{10}$$

est associée un filtre de réponse impulsionnelle :

$$h_E(t) = \frac{1}{T} \sin 2\,\eta f_2 t; \quad t \in [0, T[ \tag{11}$$

avec
$$f_1 = \frac{n}{2\,T}, f_2 = \frac{n+1}{2\,T} \quad \text{et} \quad \sqrt{LC} = \frac{1}{2\,\eta f_2}$$

Si n est grand devant l'unité, cette modulation est obtenue même en l'absence de cohérence de phase entre $V_1(t)$ et $h_E(t)$, comme cela est montrée dans l'article de la revue française mentionnée ci-dessus.

L'expression du signal y(t) obtenu à la sortie du filtre 18 de réponse $h_E(t)$ s'écrit :

$$y(t) = A \sum_{k=-\infty}^{+\infty} a_{2k-1}^* R_2(t - 2kT) \cos \frac{\eta t}{2\,T} \cos (2\,\eta f_c t + \psi) +$$
$$+ a_{2k}^* R_2(t - (2k+1)T) \sin \frac{\eta t}{2\,T} \sin (2\,\eta f_c t + \psi) \tag{12}$$

$$R_2(t) = 1 \quad \text{si} \quad t \in [-T, T[$$
$$R_2(t) = 0 \quad \text{si} \quad t \notin [-T, T[$$

On notera que dans la modulation MSK simplifiée, le filtrage se fait après la modulation, ce qui est très avantageux en haute fréquence.

Suivant une caractéristique de la présente invention, il est prévu un procédé de génération d'une modulation duobinaire FSK dans lequel on applique au train de signaux binaires modulant un précodage

4

à réponse partielle à 3 états, puis un codage par transition, puis une modulation MSK simplifiée à la fréquence porteuse, puis une division de fréquence par deux, puis une multiplication par le même signal retardé d'une période d'élément binaire.

Suivant une autre caractéristique, il est prévu un procédé de génération d'une modulation « tamed FSK », dans lequel on applique au train de signaux binaires modulant un précodage réponse partielle à 5 états, puis un codage par transition, puis une modulation MSK simplifiée à la fréquence porteuse, puis une division de fréquence par deux, puis une multiplication par le même signal retardé, d'une part, d'une période d'élément binaire et, d'autre part, de deux périodes d'élément binaire.

Suivant une autre caractéristique, il est prévu un procédé de génération d'une modulation « tamed FM » (ou TFM) dans lequel, dans le procédé de génération duobinaire mentionné ci-dessus, on procède à un filtrage de mise en forme entre la division par deux et la multiplication.

Un autre objet de l'invention consiste à prévoir des moyens pour mettre en œuvre les procédés de génération de modulation mentionnés ci-dessus.

Suivant une autre caractéristique, il est prévu un modulateur dans lequel le train de signaux binaires modulant est appliqué à un circuit de précodage à réponse partielle dont la sortie est reliée à un circuit de codage par transition dont la sortie est reliée à l'entrée d'un modulateur MSK simplifiée, dont la sortie est reliée à l'entrée d'un diviseur de fréquence par deux dont la sortie est reliée, d'une part, directement à l'entrée d'un multiplicateur et, d'autre part, à l'autre entrée du multiplicateur par un circuit de retard T, où T est la période du train d'éléments binaires.

Suivant une autre caractéristique, le modulateur est prévu pour une modulation TFM dans lequel, dans le modulateur mentionné ci-dessus, la sortie du diviseur par deux est reliée à l'entrée d'un filtre de mise en forme dont la sortie est reliée, d'une part, à une entrée dudit multiplicateur et, d'autre part, à l'entrée dudit circuit à retard.

Suivant une autre caractéristique, le filtre de mise en forme a une réponse impulsionnelle nulle si $t > T$.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Figure 1  est le schéma d'un modulateur à modulation duobinaire FSK connu (3 états),

la Figure 2  est le schéma d'un modulateur à modulation « tamed FSK » connu (5 états),

la Figure 3  est le schéma d'un modulateur à modulation MSK simplifiée connu,

la Figure 4  est le schéma d'un premier modulateur duobinaire FSK à 3 états, suivant l'invention,

la Figure 5  est le schéma d'un second modulateur « tamed FSK » à 5 états, suivant l'invention,

la Figure 6  est un diagramme illustrant les comportements des phases de modulation aux sorties des modulateurs des Figs. 4 et 5,

la Figure 7  est un diagramme illustrant les densités spectrales de puissance des modulations engendrées par les modulateurs des Figs. 4 et 5,

la Figure 8  est le schéma d'un troisième modulateur suivant l'invention et délivrant une modulation TFM à 5 états à phase et fréquence continues,

la Figure 9  est un exemple de diagramme amplitude-fréquence du filtre de mise en forme utilisé dans le modulateur de la Fig. 8,

la Figure 10  est un diagramme illustrant le comportement de la phase de modulation à la sortie du modulateur de la Fig. 8, et

la Figure 11  représente trois courbes de variations de phase en fonction du temps, ces courbes correspondant respectivement aux modulations duobinaire FSK, tamed FSK et TFM, et permettant de voir comment on passe de l'une à l'autre.

On peut obtenir la modulation à 3 états à partir d'un modulateur MSK simplifié puisque l'expression (12) ci-dessus s'écrit encore :

$$y(t) = A \cos (2\eta f_c t + \varphi(t) + \psi)$$

avec
$$\text{tg } \varphi(t) = - \sum_{k=-\infty}^{+\infty} \left( \frac{a_k^*}{a_{k-1}^*} \text{tg } \frac{\eta t}{2T} \right) R_1(t - kT) \tag{13}$$

Comme $\dfrac{a_k^*}{a_{k-1}^*} = \pm 1$, en utilisant la continuité de la phase déduite de l'expression (12), on a :

$$\varphi(t) = - \sum_{k=-\infty}^{+\infty} \left( \frac{a_k^*}{a_{k-1}^*} \frac{\eta(t-kT)}{2T} - \varphi(kT) \right) R_1(t - kT) \tag{14}$$

$$\frac{\varphi(t)}{2} = - \sum_{k=-\infty}^{+\infty} \left( \frac{a_k^*}{a_{k-1}^*} \frac{\eta(t-kT)}{4T} - \frac{\varphi(kT)}{2} \right) R_1(t - kT) \tag{15}$$

$$\frac{\varphi(t-T)}{2} = - \sum_{k=-\infty}^{+\infty} \left( \frac{a_{k-1}^*}{a_{k-2}^*} \frac{\eta(t-kT)}{4T} - \frac{\varphi((k-1)T)}{2} \right) R_1(t - kT) \tag{16}$$

soit en posant

$$\phi_3(t) = \frac{\varphi(t)}{2} + \frac{\varphi(t - kT)}{2} \quad \text{et} \quad d_n^* = -a_n^* a_{n-1}^1$$

$$\phi_3(t) = \sum_{k=-\infty}^{+\infty} \left( \frac{d_k^* + d_{k-1}^*}{2} \frac{\eta(t - kT)}{2T} + \phi_3(kT) \right) R_1(t - kT) . \tag{17}$$

Ce codage binaire à signal correspond à celui du tableau I ci-dessous.

Tableau I

| $\alpha_k$ | $d_{k-1}$ | $d_k$ | $d^*_{k-1}$ | $d^*_k$ | $\dfrac{d^*_k + d^*_{k-1}}{2}$ | Saut de phase émis dans l'intervalle $[kT, (k+1)T[$ | fréquence émise |
|---|---|---|---|---|---|---|---|
| 0 | 0 | 0 | −1 | −1 | −1 | − /2 | $f_c - 1/4T$ |
| | 1 | 1 | 1 | 1 | 1 | /2 | $f_c + 1/4T$ |
| 1 | 1 | 0 | 1 | −1 | 0 | 0 | $f_c$ |
| | 0 | 1 | −1 | 1 | 0 | 0 | $f_c$ |

On peut remarquer que :

$$\frac{d_n^* - d_{n-1}^*}{2} = (d_n + d_{n-i}) - 1 = p_n - 1 .$$

Donc on retrouve, pour les signaux $d^*_n$, l'expression (3), c'est-à-dire la modulation à réponse partielle à 3 états de fréquence pour laquelle la continuité de la phase est assurée à chaque transition.

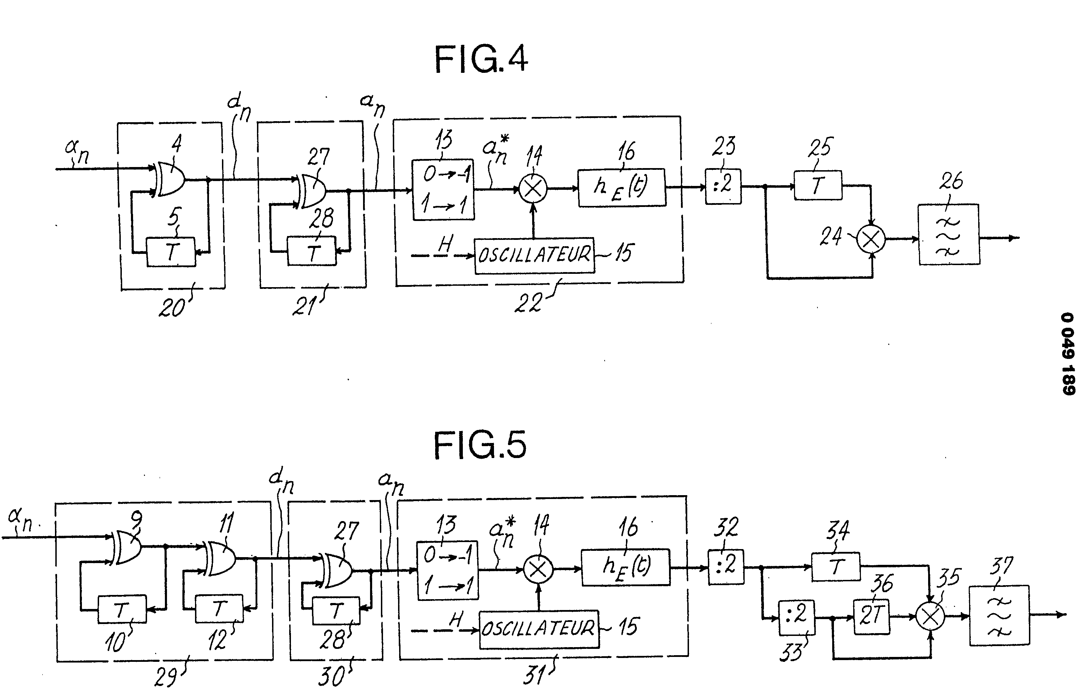

Dans le modulateur de la Fig. 4, les signaux binaires purs $\alpha_n$ sont appliqués à l'entrée d'un circuit de précodage 20 dont la sortie est reliée à l'entrée d'un circuit de codage par transition 21 dont la sortie est reliée à l'entrée d'un modulateur MSK simplifié 22 dont la sortie est reliée à l'entrée d'un diviseur par deux 23. La sortie du diviseur par deux 23 est reliée, d'une part, directement à la première entrée d'un multiplicateur 24 et, d'autre part, par l'intermédiaire d'un circuit à retard T 25, à la seconde entrée de l'additionneur 24. La sortie de l'additionneur 24 est reliée à l'entrée d'un filtre de bande 26.

Le circuit de précodage 20 est identique au circuit de précodage 1 de la Fig. 1. C'est pourquoi on a affecté aux composants du circuit 20 les mêmes références numériques qu'aux composants du circuit 1. Le circuit de codage par transition 21 comprend également une porte OU-exclusif 27 dont la sortie est reliée, par un circuit à retard T 28, à une de ses entrées. Le modulateur MSK simplifié 22 est identique à celui de la Fig. 3. C'est pourquoi on y a repris les mêmes références numériques pour désigner les circuits qui le composent.

Le circuit 20 transforme les signaux $\alpha_n$ en signaux $d_n$. Le circuit 21 transforme les signaux $d_n$ en signaux $a_n$. Dans le modulateur 22, le circuit 13 transforme les signaux binaires $(0, 1)$ $a_n$ en signaux $(-1, 1)$ $a^*_n$. Le diviseur par deux 23 effectue l'opération conforme à l'expression (15) ci-dessus. Le circuit à retard 25 effectue l'opération conforme à l'expression (16) ci-dessus et le multiplicateur 24 effectue l'addition des phases de ses signaux d'entrée pour obtenir un signal conforme à l'expression 17. Le multiplicateur 24 peut être un modulateur en anneau classique. Le filtre de bande 26 est centré sur la fréquence centrale $f_c = (f_1 + f_2)/2$ et a pour effet d'éliminer les harmoniques. Le filtre 26 doit avoir une bande passante suffisamment large pour transmettre sans distorsion le signal modulé. Dans un exemple de réalisation, il a été réalisé sous la forme d'un filtre de Butterworth à trois pôles de largeur de bande à 3 dB de 2,5 MHz pour un débit de 2 Mbit/s. Son seul but est d'éliminer des battements parasites en dehors de la bande.

Si on reprend l'expression de la phase $\varphi(t)$ à la sortie du modulateur MSK et si l'on calcule successivement $(\varphi(t))/4$, $(\varphi(t - T))/2$ et $(\varphi(t - 2T))/4$, on a, après sommation :

$$\phi_5(t) = \frac{\varphi(t)}{4} + \frac{\varphi(t-T)}{2} + \frac{\varphi(t-2T)}{4} \tag{18}$$

et si l'on pose :

$$d_n^* = -a_n^* a_{n-1}^*$$

on a :

$$\phi_5(t) = \sum_{k=-\infty}^{+\infty} \left[ \left( \frac{1}{4} d_k^* + \frac{1}{2} d_{k-1}^* + \frac{1}{4} d_{k-2}^* \right) \frac{\eta(t-kT)}{2T} + \phi(kT) \right] R_1(t-kT)$$

qui est l'expression d'une modulation à 5 états de fréquence d'indice 1/2 à phase continue.
Ce codage binaire à signal correspond à celui du tableau II ci-dessous.

Tableau II

| $\alpha_k$ | $d_{k-2}$ | $d_{k-1}$ | $d_k$ | $(\frac{1}{4}d^*_{k-2} + \frac{1}{2}d^*_{k-1} + \frac{1}{4}d^*_k)$ | Saut de phase émis | fréquence émise |
|---|---|---|---|---|---|---|
| 0 | 1 | 1 | 1 | 1 | $\pi/2$ | $f_c + 1/4T$ |
| | 0 | 0 | 0 | $-1$ | $-\pi/2$ | $f_c - 1/4T$ |
| | 1 | 0 | 1 | 0 | 0 | $f_c$ |
| | 0 | 1 | 0 | 0 | 0 | $f_c$ |
| 1 | 1 | 0 | 0 | $-\frac{1}{2}$ | $-\pi/4$ | $f_c - 1/8T$ |
| | 0 | 0 | 1 | $-\frac{1}{2}$ | $-\pi/4$ | $f_c - 1/8T$ |
| | 1 | 1 | 0 | $\frac{1}{2}$ | $\pi/4$ | $f_c + 1/8T$ |
| | 0 | 1 | 1 | $\frac{1}{2}$ | $\pi/4$ | $f_c + 1/8T$ |

On peut remarquer que :

$$\frac{1}{4} d_{k-2}^* + \frac{1}{2} d_{k-1}^* + \frac{1}{4} d_k^* = \frac{(d_{k-2} + 2 d_{k-1} + d_k) - 2}{2} = \frac{p_n - 2}{2}.$$

Donc, on retrouve la modulation à réponse partielle à 5 états de fréquence pour laquelle la continuité de la phase est assurée à chaque transition.

Dans le modulateur de la Fig. 5, les signaux $\alpha_n$ sont appliqués à l'entrée d'un circuit de précodage 29 dont la sortie est reliée à l'entrée d'un circuit de codage par transition 30 dont la sortie est reliée à l'entrée d'un modulateur MSK simplifié 31 dont la sortie est reliée à l'entrée d'un diviseur par deux 32. La sortie du diviseur par deux 32 est reliée, d'une part, à l'entrée d'un autre diviseur par deux 33, et, d'autre part, par l'intermédiaire d'un circuit à retard T 34, à la première entrée d'un multiplicateur 35. La sortie du diviseur par deux 33 est reliée, d'une part, directement à la seconde entrée du multiplicateur 35, et, d'autre part, par l'intermédiaire d'un circuit à retard 2T 36 à la troisième entrée du multiplicateur 35. La sortie du multiplicateur 35 est reliée à l'entrée d'un filtre de bande 37 qui délivre le signal modulé.

Le circuit de précodage 29 est identique au circuit de précodage 6 de la Fig. 2. Le circuit 30 est identique au circuit 21 de la Fig. 5. Le modulateur MSK simplifié 31 est identique à celui de la Fig. 3. C'est pourquoi on y a repris les mêmes références numériques pour désigner les circuits qui le composent. Les diviseurs par deux 32 et 33 ont pour rôle de préparer les termes de l'expression (18) ci-dessus. Le multiplicateur 35, qui peut se décomposer en deux multiplicateurs en anneau, effectue les multiplications nécessaires pour obtenir les additions de phase de l'expression (18). Le filtre de bande 37 est centré sur la fréquence centrale $f_c = (f_1 + f_2)/2$ et a pour effet d'éliminer les harmoniques.

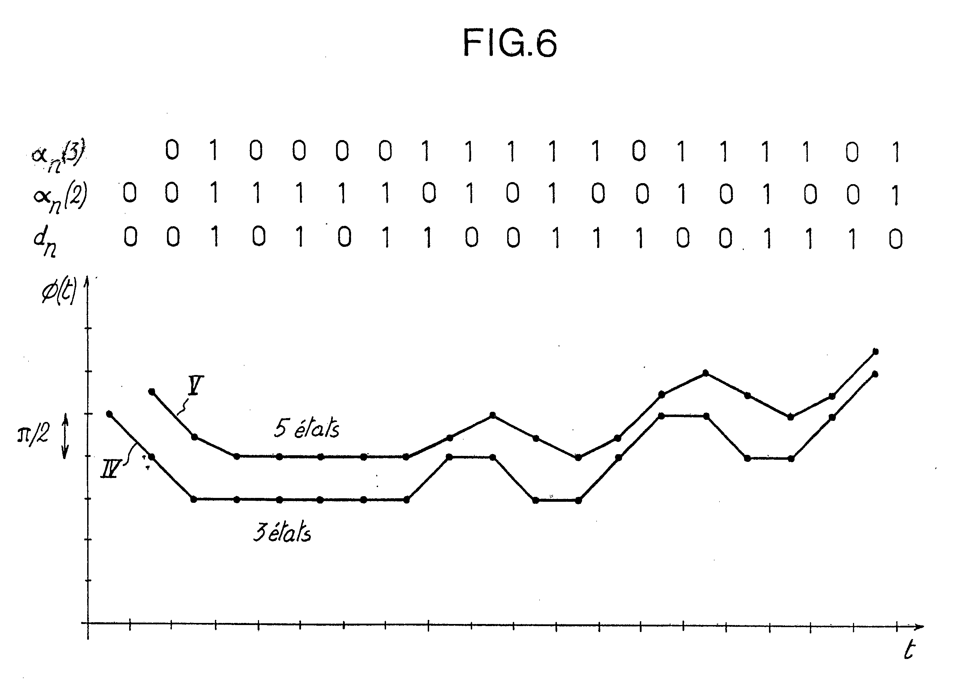

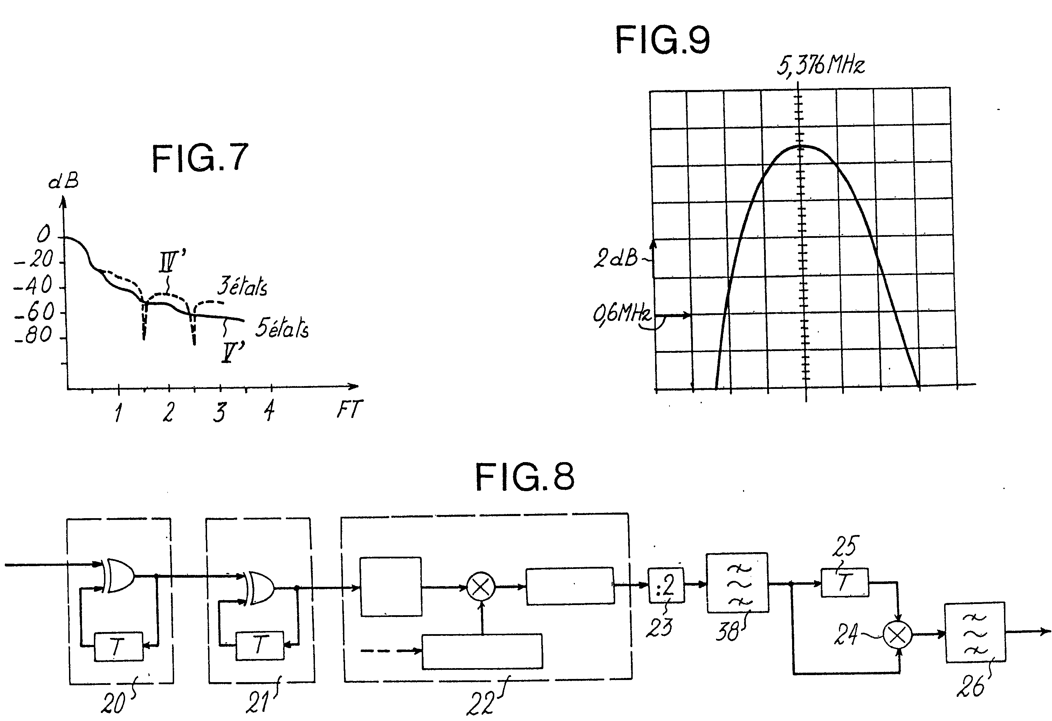

Pour une suite donnée des symboles $d_n$, la Fig. 6 représente les variations de la phase des signaux IV et V respectivement délivrés par les modulateurs des Figs. 4 et 5. Les densités spectrales de puissance correspondantes sont représentées à la Fig. 7 par les courbes IV′ et V′. Si l'on observe les courbes des

**0 049 189**

Figs. 6 et 7, il apparaît que le passage de 3 à 5 états ne conduit pas à une réduction très importante de la bande.

En pratique, pour assurer une décroissance plus rapide de la densité spectrale de puissance, il faut assurer non seulement la continuité de la phase, mais également la continuité de sa dérivée, c'est-à-dire la continuité de la fréquence instantanée du signal modulé. Pour obtenir ce résultat, il est proposé, suivant l'invention, de mettre en forme les transitions de phase, ou autrement dit, de lisser les transitions de phase.

Le modulateur de la Fig. 8, dans lequel les transitions de phase sont lissées, se déduit du modulateur de la Fig. 4 par l'insertion d'un filtre 38 à la sortie du diviseur par deux 23. Ainsi, la sortie de 38 est reliée au multiplicateur 24 et au circuit à retard 25. Le filtre 38 dont le rôle consiste à mettre en forme les transitions est, en pratique, un filtre dont la réponse impulsionnelle est nulle si $t > T$, condition suffisante pour conserver la valeur de la phase émise aux instants $(k + 1/2)T$.

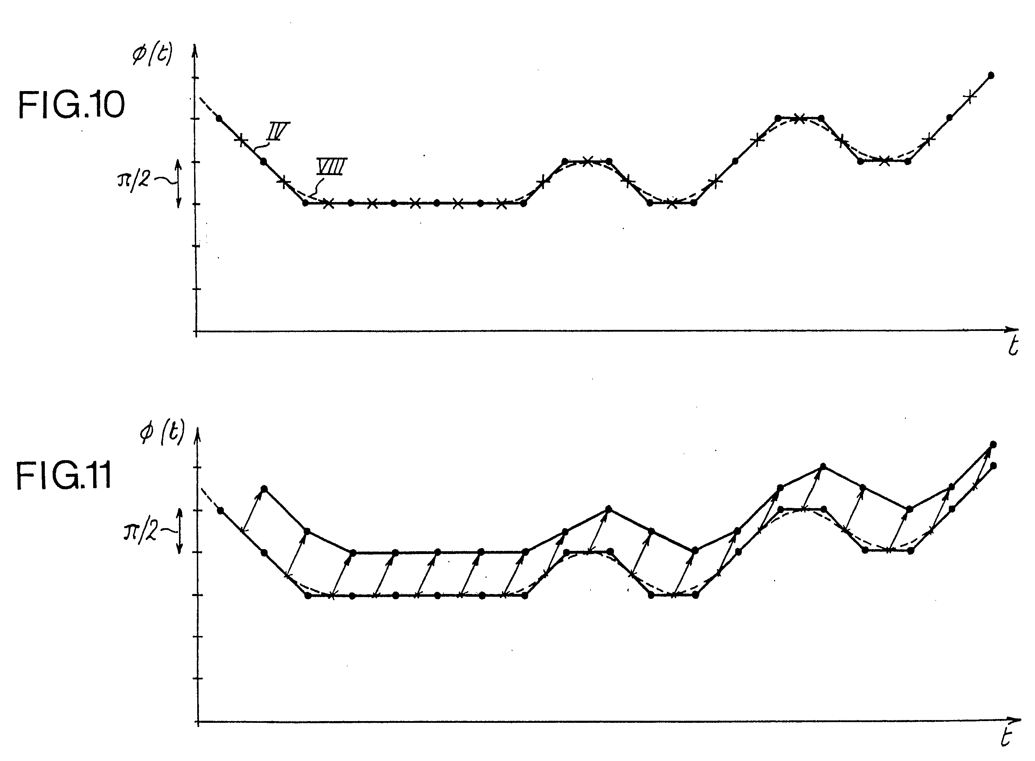

Dans un exemple de réalisation, qui a servi à évaluer expérimentalement le modulateur de la Fig. 8, le filtre 38 était pratiquement un filtre de type gaussien à trois pôles, avec une largeur de bande à 3 dB de 1,5 MHz, pour un taux de transmission de 2,048 Mbit/s. La Fig. 9 montre la courbe de réponse amplitude-fréquence d'un tel filtre. Sa réponse impulsionnelle est formée d'une arche de sinusoïde dont le support est voisin de 1,4 T.

Si l'on considère à nouveau, à la Fig. 10, la courbe IV de la Fig. 6 et que l'on marque sur cette courbe, à côté des petits cercles correspondant aux instants kT, des croix correspondant aux instants $(k + 1/2)T$, il apparaît que l'on peut, à côté de la courbe IV en traits pleins, tracer une courbe VIII qui passe par toutes les croix, mais qui « lisse » tous les coudes angulaires de la courbe IV. En pratique, la courbe VIII représente les variations de la phase à la sortie du modulateur de la Fig. 8. En effet, le filtre 38 effectue le lissage de la courbe IV.

On peut constater que la modulation obtenue à la sortie du modulateur de la Fig. 8, illustrée par la courbe VIII de la Fig. 10, est une modulation à 5 états. En effet, les sauts de phase émis entre les instants $(k + 1/2)T$ et $(k + 1 + 1/2)T$ correspondent à la somme des deux demi-sauts :

$$\frac{d_k^* + d_{k-1}^*}{2} \frac{\eta}{2T} \frac{T}{2}$$

et

$$\frac{d_{k+1}^* + d_k^*}{2} \frac{\eta}{2T} \frac{T}{2}.$$

Soit :

$$\left( \frac{d_{k+1}^*}{4} + \frac{d_k^*}{2} + \frac{d_{k-1}^*}{4} \right) \frac{\eta}{2}.$$

La dernière expression correspond effectivement à la règle du codage de la modulation à 5 états, que l'on a défini plus haut.

Il faut noter que, pour une même suite $d_n$, la phase aux instants $(k + 1)T$ de la modulation à 5 états se déduit directement de la phase aux instants $(k + 1/2)T$ de la modulation à 3 états. La mise en forme des transitions par le filtre 38 ne modifiant pas ces valeurs, la structure d'un démodulateur conçu pour la modulation à 3 états et utilisant l'instant d'échantillonnage $(k + 1/2)T$ conviendra donc encore, quelle que soit la forme des transitions, à la démodulation des signaux à 5 états. Cela est illustré à la Fig. 11 où la courbe supérieure correspond à une modulation tamed FSK (à cinq états), la courbe inférieure en trait plein à une modulation duobinaire FSK et la courbe inférieure en pointillés à la modulation TFM, ces courbes correspondant évidemment au même train d'éléments binaires. Les flèches indiquent comment on passe des courbes inférieures à la courbe supérieure.

## Revendications

1. Procédé de génération d'une modulation duobinaire FSK dans lequel on applique d'abord au train de signaux binaires modulant un précodage à réponse partielle à 3 états, puis au signal précodé un codage par transition, caractérisé en ce qu'on applique ensuite au signal résultant codé par transition une modulation MSK simplifiée à la fréquence porteuse, puis au signal modulé une division de fréquence par deux, et enfin au signal modulé à fréquence divisée par deux, une multiplication par le même signal modulé à fréquence divisée par deux, retardé d'une période d'élément binaire.

2. Procédé de génération d'une modulation «tamed FSK », dans lequel on applique d'abord au train de signaux binaires modulant un précodage à réponse partielle à 5 états, puis au signal précodé un codage par transition, caractérisé en ce qu'on applique ensuite au signal résultant codé par transition une modulation MSK simplifiée à la fréquence porteuse, puis au signal modulé une division de fréquence par deux, et enfin au signal modulé à fréquence divisée par deux une multiplication par le même signal

8

modulé à fréquence divisée par deux retardé, d'une part, d'une période d'élément binaire et, d'autre part, de deux périodes d'élément binaire.

3. Procédé de génération d'une modulation TFM, en utilisant le procédé de génération duobinaire FSK suivant la revendication 1, caractérisé en ce que, dans celui-ci, on procède à un filtrage de mise en forme entre la division par deux et la multiplication.

4. Modulateur mettant en œuvre le procédé suivant la revendication 1, dans lequel le train de signaux binaires modulant est appliqué à un circuit de précodage à réponse partielle (20) dont la sortie est reliée à un circuit de codage par transition (21), caractérisé en ce que la sortie dudit circuit de codage par transition est reliée à l'entrée d'un modulateur MSK simplifiée (22), dont la sortie est reliée à l'entrée d'un diviseur de fréquence par deux (23) dont la sortie est reliée, d'une part, directement à l'entrée d'un multiplicateur (24) et, d'autre part, à l'autre entrée du multiplicateur (24) par un circuit de retard T (25), où T est la période du train d'éléments binaires.

5. Modulateur suivant la revendication 4, pour obtenir une modulation TFM, caractérisé en ce que la sortie du diviseur par deux (23) est reliée à l'entrée d'un filtre de mise en forme (38) dont la sortie est reliée, d'une part, à une entrée dudit multiplicateur (24) et, d'autre part, à l'entrée dudit circuit à retard (25).

6. Modulateur suivant la revendication 5, caractérisé en ce que le filtre de mise en forme (38) à une réponse impulsionnelle nulle si t > T.

7. Modulateur suivant la revendication 5, caractérisé en ce que le filtre de mise en forme (38) est un filtre gaussien à trois pôles de largeur de bande à 3 dB égale à 0,7/T.


**Claims**

1. A process for generating a duobinary FSK modulation in which there is first applied to the modulating binary signal train a 3-state partial response precoding, then to the precoded signal a coding by transition, characterized in that there is then applied to the resulting transition coded signal a simplified MSK modulation at the carrier frequency, then to the modulated signal a frequency division by two, and finally to the divided-by-two frequency modulated signal, a multiplication by the same divided-by-two frequency modulated signal delayed by one bit period.

2. A process for generating a « tamed FSK » modulation, in which there is first applied to the modulating binary signal train a 5-state partial response precoding, then to the precoded signal a coding by transition, characterized in that there is then applied to the resulting transition coded signal a simplified MSK modulation at the carrier frequency, then to the modulated signal a frequency division by two, and finally to the divided-by-two frequency modulated signal, a multiplication by the same divided-by-two frequency modulated signal delayed, on one hand, by one bit period and, on the other hand, by two bit periods.

3. A process for generating a TFM modulation from the duobinary FSK generation process according to claim 1, characterized in that a shaping filtering is applied between the frequency division by two and the multiplication.

4. A modulator embodying the process according to claim 1, wherein the modulating binary signal train is applied to a partial response precoding circuit (20) the output of which is connected to a transition coding circuit (21), characterized in that the output of said transition coding circuit is connected to the input of a simplified MSK modulator (22), the output of which is connected to the input of a frequency divider-by-two (23) the output of which is connected, on the one hand, directly to the input of a multiplier (24) and, on the other hand, to the other input of multiplier (24) through a delay circuit (25) delaying by T, where T is the period of the train of binary elements.

5. A modulator according to claim 4, used to obtain a TFM modulation, characterized in that the output of the frequency divider-by-two (23) is connected to the input of a shaping filter (38) the output of which is connected, on the one hand, to an input of said multiplier (24) and, on the other hand, to the input of said delay circuit (25).

6. A modulator according to claim 5, characterized in that the shaping filter (38) has a null impulse response when t > T.

7. A modulator according to claim 5, characterized in that shaping filter (38) is a 3-pole gaussian filter having a 3 dB bandwidth of 0,7/T.


**Ansprüche**

1. Verfahren zur Erzeugung einer duobinären FSK-Modulation, bei dem zunächst dem modulierenden Binärsignal-Zug eine 3-Zustands-Teilantwort-Vorkodierung und danach dem vorkodierten Signal eine Übergangskodierung auferlegt wird, dadurch gekennzeichnet, daß anschließend dem resultierenden übergangskodierten Signal eine vereinfachte MSK-Modulation mit der Trägerfrequenz auferlegt wird, daß dann das modulierte Signal einer Frequenzteilung durch zwei unterworfen wird, und daß schließlich das durch zwei geteilte frequenzmodulierte Signal einer Multiplikation mit dem gleichen, um eine Binärelement-Periode verzögerten, durch zwei geteilten frequenzmodulierten Signal unterworfen wird.

2. Verfahren zur Erzeugung einer « tamed FSK »-Modulation, bei dem zunächst dem modulierenden Binärsignal-Zug eine 5-Zustands- Teilantwort-Vorkodierung und danach dem vorkodierten Signal eine Übergangskodierung auferlegt wird, dadurch gekennzeichnet, daß anschließend dem resultierenden übergangskodierten Signal eine vereinfachte MSK-Modulation mit der Trägerfrequenz auferlegt wird, daß danach das modulierte Signal einer Frequenzteilung durch zwei unterworfen wird, und daß schließlich das durch zwei geteilte frequenzmodulierte Signal einer Multiplikation mit dem gleichen einerseits durch eine Binärelement-Periode und andererseits durch zwei Binärelement-Perioden verzögerten, durch zwei geteilten frequenzmodulierten Signal unterworfen wird.

3. Verfahren zur Erzeugung einer TDM-Modulation unter Verwendung des duobinären FSK-Erzeugungs-Verfahrens gemäß Anspruch 1, dadurch gekennzeichnet, daß zwischen der Frequenzteilung durch zwei und der Multiplikation eine formende Filterung erfolgt.

4. Modulator zur Durchführung des Verfahrens nach Anspruch 1, wobei der modulierende Binärsignal-Zug einer Teilantwort-Vorkodierungs-Schaltung (20) zugeführt wird, deren Ausgang mit einer Übergangs-Kodierungs-Schaltung (21) verbunden ist, dadurch gekennzeichnet, daß der Ausgang der genannten Übergangs-Kodierungs-Schaltung mit dem Eingang eines vereinfachten MSK-Modulators (22) verbunden ist, dessen Ausgang mit dem Eingang eines durch zwei teilenden Frequenzteilers (23) verbunden ist, dessen Ausgang einerseits direkt mit dem Eingang einer Multiplizierschaltung (24) und andererseits mit dem anderen Eingang der Multiplizierschaltung (24) über eine Verzögerungs-Schaltung (25) mit der Verzögerung T verbunden ist, wobei T die Periode des Binärelement-Zuges ist.

5. Modulator nach Anspruch 4 zur Erzeugung einer TFM-Modulation, dadurch gekennzeichnet, daß der Ausgang des durch zwei teilenden Frequenzteilers (23) mit dem Eingang eines formenden Filters (38) verbunden ist, dessen Ausgang einerseits mit einem Eingang der genannten Multiplizierschaltung (24) und andererseits mit dem Eingang der genannten Verzögerungs-Schaltung (25) verbunden ist.

6. Modulator nach Anspruch 5, dadurch gekennzeichnet, daß das formende Filter (38) ein Null-Impuls-Ansprechen aufweist, wenn $t > T$ ist.

7. Modulator nach Anspruch 5, dadurch gekennzeichnet, daß das formende Filter (38) ein dreipoliges Gauss-Filter mit einer Bandbreite von 3 dB gleich 0,7/T ist.

0 049 189

# FIG.1

# FIG.2

# FIG.3

1

# FIG.4

# FIG.5

0 049 189

# FIG.6

$\alpha_n(3)$    0 1 0 0 0 0 1 1 1 1 1 0 1 1 1 1 0 1

$\alpha_n(2)$   0 0 1 1 1 1 1 0 1 0 1 0 0 1 0 1 0 0 1

$d_n$     0 0 1 0 1 0 1 1 0 0 1 1 1 0 0 1 1 1 0

$\phi(t)$

$\pi/2$

V

IV

5 états

3 états

t

0 049 189

# FIG.7

# FIG.9

# FIG.8

0 049 189

FIG.10

$\phi(t)$

$\pi/2$

IV

VIII

$t$

5

FIG.11

$\phi(t)$

$\pi/2$

$t$